(19) Europäisches Patentamt
European Patent Office
Office européen des brevets

(11) **EP 3 796 043 B1**

(12) **EUROPÄISCHE PATENTSCHRIFT**

(45) Veröffentlichungstag und Bekanntmachung des Hinweises auf die Patenterteilung:
**02.02.2022 Patentblatt 2022/05**

(21) Anmeldenummer: **20194722.3**

(22) Anmeldetag: **04.09.2020**

(51) Internationale Patentklassifikation (IPC):
**G01S 13/88** (2006.01)    **G01N 21/00** (2006.01)
**B25J 15/06** (2006.01)

(52) Gemeinsame Patentklassifikation (CPC):
**G01S 13/88; G01B 7/06; G01B 11/0625;**
**G01N 15/00;** G01N 21/3581

(54) **VERFAHREN ZUR BESTIMMUNG EINER UNBESTIMMTEN ANZAHL VON PLATTENFÖRMIGEN ERZEUGNISSEN AUS HOLZ ODER HOLZERSATZSTOFFEN**

METHOD FOR DETERMINING AN UNDETERMINED NUMBER OF PLATE-SHAPED PRODUCTS MADE FROM WOOD OR WOOD SUBSTITUTES

PROCÉDÉ DE DÉTERMINATION D'UN NOMBRE INDÉTERMINÉ DE PRODUITS EN FORME DE PLAQUE EN BOIS OU EN MATÉRIAU DE SUBSTITUTION DU BOIS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.09.2019 DE 102019125362**

(43) Veröffentlichungstag der Anmeldung:
**24.03.2021 Patentblatt 2021/12**

(73) Patentinhaber: **IMA Schelling Deutschland GmbH 32312 Lübbecke (DE)**

(72) Erfinder: **Bilges, Kevin Christoph 32351 Stemwede (DE)**

(74) Vertreter: **Schober, Mirko Thielking & Elbertzhagen Patentanwälte Gadderbaumer Strasse 14 33602 Bielefeld (DE)**

(56) Entgegenhaltungen:
**DE-A1-102016 101 566**

- **ALBERT REDO-SANCHEZ ET AL: "Terahertz time-gated spectral imaging for content extraction through layered structures", NATURE COMMUNICATIONS, Bd. 7, 9. September 2016 (2016-09-09), Seite 12665, XP055442436, GB ISSN: 2041-1723, DOI: 10.1038/ncomms12665**
- **CORINNA L. KOCH DANDOLO ET AL: "Inspection of panel paintings beneath gilded finishes using terahertz time-domain imaging", STUDIES IN CONSERVATION, Bd. 60, Nr. sup1, 10. August 2015 (2015-08-10), Seiten S159-S166, XP055766548, US ISSN: 0039-3630, DOI: 10.1179/0039363015Z.000000000220**
- **DANDOLO CORINNA L K ET AL: "Characterization of European lacquers by terahertz (THz) reflectometric imaging", 2013 DIGITAL HERITAGE INTERNATIONAL CONGRESS (DIGITALHERITAGE), IEEE, Bd. 1, 28. Oktober 2013 (2013-10-28), Seiten 89-94, XP032568058, DOI: 10.1109/DIGITALHERITAGE.2013.6743717 ISBN: 978-1-4799-3168-2 [gefunden am 2014-02-18]**

**Beschreibung**

Die vorliegende Erfindung betrifft ein Verfahren zur Bestimmung einer unbestimmten Anzahl von plattenförmigen Erzeugnissen aus Holz oder Holzersatzstoffen.

In der Holzverarbeitung werden oftmals Platten über eine Saugeinrichtung von einem Plattenstapel abgehoben und anschließend beispielsweise in eine Holzverarbeitungsmaschine eingelegt.

Aufgrund der relativ starken Saugkräfte und den vorhandenen Adhäsionskräften zwischen den Platten kommt es mitunter vor, dass nicht lediglich eine Platte angehoben wird, sondern die Saugwirkung auch die darunterliegende Platte erfasst und mit anhebt. Dies ist selbstverständlich nicht gewünscht. Folglich besteht ein Bedarf daran zu erkennen, ob eine Saugvorrichtung mehr als eine Platte erfasst hat.

Aus EP 2 522 471 B1 ist eine Handhabungsvorrichtung zum Anheben eines plattenförmigen Werkstücks bekannt, bei der das an der Handhabungsvorrichtung angesaugte Plattengewicht gemessen und, falls dies zu hoch ist, die Saugkraft reduziert wird.

Aus "ALBERT REDO-SANCHEZ ET AL: "Terahertz time-gated spectral imaging for content extraction through layered structures", NATURE COMMUNICATIONS, Bd. 7, 9. September 2016 wird ein Verfahren vorgeschlagen, mit welchem sich mittels gepulster Radarstrahlung Schichtstrukturen wie zum Beispiel Papierstapel vermessen lassen. Dabei werden Radarpulse auf einem Papierstapel ausgestrahlt und es wird eine entsprechende Reflexion gemessen. Aus der reflektierten Strahlung werden beispielsweise verdeckte Textpassagen auf einer Papierseite des Stapels extrahiert.

Auf ähnliche Weise wird in CORINNA L., KOCH, DANDOLO ET AL: "Inspection of panel paintings beneath gilded finishes using terahertz time-domain imaging", STUDIES IN CONSERVATION, Bd. 60, 10.8.2015, S. 159-166, beschrieben, wie mithilfe zeitaufgelöster Radarstrahlung einzelne Lagen eines Gemäldes untersucht werden, beispielsweise um Defekte, Risse und dergleichen feststellen zu können.

Aus DANDOLO CORINNA L K ET AL: "Characterization of European Lecquers by terahertz (THz) reflectrometic imaging", 2013 DIGITAL HERITAGE INTERNATIONAL CONGRESS, IEEE, Bd. 1, 28.10.2013, S. 89-94, wird eine Methode diskutiert, mit deren Hilfe sich über reflektormetrische Messungen mit Radarstrahlung Lackschichten auf Defekte untersuchen lassen.

DE 10 2016 101 566 A1 beschreibt ein Messverfahren und eine Messvorrichtung zum Ermitteln der Materialdicke oder Schichtdicke eines Objekts. Dazu werden unter anderem Objekte mit Radarstrahlung bestrahlt und aus den Reflexionen die Materialstärke des bestrahlten Objekts bestimmt.

Nachteil an der aus EP 2 522 471 B1 bekannten Herangehensweise ist, dass im Vorhinein bekannt sein muss, wie schwer die Platten sind, da das Verfahren sonst nicht funktionieren würde, da nicht erkennbar wäre, ob tatsächlich eine zweite Platte angesaugt wurde.

Aufgabe der vorliegenden Erfindung ist es daher, ein Verfahren anzugeben, mit welchem die genannten Nachteile vermieden werden.

Gelöst wird diese Aufgabe durch ein Verfahren mit den Merkmalen des Anspruchs 1, vorteilhafte Ausführungsformen finden sich in den Unteransprüchen.

Die Erfindung basiert auf dem Gedanken, eine Platte aus Holz oder Holzersatzstoffen mit einer elektromagnetischen Strahlung zu bestrahlen. Die Strahlung ist in der Lage, die Platte zu penetrieren und Reflexe an den Grenzflächen (Oberseite oder Unterseite einer Platte) zu erzeugen. Die Reflexe werden erfindungsgemäß ausgewertet und geben Aufschluss über die Anzahl von Grenzflächen, auf die die ausgestrahlte elektromagnetische Strahlung, insbesondere Radar- oder Terahertzstrahlung, getroffen ist. Aus der Mischung eines Ausgangssignals und der reflektierten Strahlungen können dann Rückschlüsse über die Anzahl der vorhandenen Platten oder andere Eigenschaften der Platten, einschließlich deren Dicke, Qualität oder Stapelhöhe, gewonnen werden.

Das erfindungsgemäße Verfahren zur Bestimmung einer unbestimmten Anzahl von plattenförmigen Erzeugnissen aus Holz oder Holzersatzstoffen umfasst daher folgendes:
Es wird eine Strahlungsquelle eingesetzt, welche auf die unbestimmte Anzahl von plattenförmigen Erzeugnissen gerichtet und mit von der Strahlungsquelle emittierten elektromagnetischen Strahlung, insbesondere Radar- oder Terahertzstrahlung, $f(t)$ bestrahlt wird, wobei die emittierte Strahlung als Ausgangssignal als Funktion der Zeit t mit periodisch veränderter Frequenz emittiert wird. Bevorzugt ist vorgesehen, dass die Ausgangsstrahlung einen sägezahnförmigen Frequenzverlauf aufweist. Das Echo $a(t)$, also die Summe der von den Grenzflächen einer oder mehrerer Platten zurückgeworfenen Reflexe der emittierten Strahlung, wird als Eingangssignal durch einen, insbesondere am Ort der Strahlungsquelle angeordneten Empfänger erfasst. Wie erwähnt, enthält das Echo $a(t)$ eine Summe von für vorhandene Grenzflächen der unbestimmten Anzahl von plattenförmigen Erzeugnissen repräsentativen Reflexionssignalen $a_1(t)$, $a_2(t)$,..., $a_n(t)$.

Weiter ist vorgesehen, dass aus dem Ausgangssignal $f(t)$ und dem Eingangssignal $a(t)$ ein Mischsignal $m(t)$, insbesondere in der Form einer Verknüpfung der beiden Signale $f(t)$ und $a(t)$, gebildet wird. Auf der Grundlage dieses Mischsignals $m(t)$ wird/werden erfindungsgemäß dann die Anzahl der unbestimmten Anzahl und/oder die Stärken von plattenförmigen Erzeugnissen und/oder die Höhe eines Stapels aus den plattenförmigen Erzeugnissen und/oder die Qualität von plattenförmigen Erzeugnissen bestimmt.

In einer bevorzugten Ausführungsform handelt es sich bei der Verknüpfung der beiden Signale f(t) und a(t) um eine Multiplikation:

$$m(t) = f(t) \times a(t) \qquad (1).$$

Da

$$f(t) = a_0 \cos(\omega_0\ t) \qquad (2),$$

mit $\omega_0$ der zeitabhängigen Sendefrequenz, und

$$a(t) = \Sigma a_i \cos(\omega_i\ t + \varphi_i) \quad (3),$$

jeweils zeitabhängige Cosinusfunktionen sind, ergibt das Produkt eine Summe aus Cosinusfunktionen, mit einem sich schnell verändernden Summanden $S_1(f)$:

$$S_1(f) = a_0/2\ \Sigma a_i \cos(\omega_0 + \omega_i)\ t + \varphi_i) \quad (4a)$$

und einem sich langsam ändernden Summanden $S_2(f)$:

$$S_2(f) = a_0/2\ \Sigma a_i \cos(\omega_0 - \omega_i)\ t - \varphi_i) \quad (4b)$$

Durch das Penetrieren der Strahlung durch die plattenförmigen Erzeugnisse werden bei der reflektierten Strahlung gegenüber dem Ausgangssignal Frequenzverschiebungen einerseits und auch Intensitätsabschwächungen andererseits am Empfänger beobachtet. Erfindungsgemäß kann vorgesehen sein, dass auf der Grundlage der im Mischsignal m(t) enthaltenen Frequenzunterschiede Δf zwischen dem Ausgangssignal und dem/den Reflexionssignal(en) Laufzeiten oder Laufzeitunterschiede (Δt) oder die zurückgelegte Entfernung oder Entfernungsunterschiede der einzelnen Reflexionssignale a1(t), a2(t),..., an (t) ermittelt werden. Durch diese Auswertung kann insbesondere Aufschluss über Plattenabstände und Stapelhöhen gewonnen werden.

In einem bevorzugten Verfahren weist das Ausgangssignal f(t) einen sägezahnförmigen Frequenzverlauf auf. Dies hat den Vorteil, dass bei einer gegebenen Laufzeit eine nahezu feste Frequenzdifferenz zwischen Ausgangs- und Eingangssignal gegeben ist, was die Auswertung erleichtert. So ist bspw. bei dem sich langsam ändernden Summanden $S_2(f)$ in der Gleichung 4b durch den linearen Anstieg der Sendefrequenz die Differenz ($\omega_0 - \omega_i$) konstant, so dass ein zeitunabhängiges Signal messbar wird:

$$S_2(f) = a_0/2\ \Sigma a_i \cos(\Delta\omega_i)\ t - \varphi_i) \quad (4b').$$

Bevorzugt wird aus dem Mischsignal m(t) ein Frequenzspektrum S(f) ermittelt, was besonders einfach geht, wenn ein sägezahnförmiger Frequenzverlauf verwendet wird. In diesem Fall gibt es eine laufzeitabhängige feste Frequenzdifferenz zwischen Sende- und Empfangsfrequenz.

Besonders bevorzugt wird das Frequenzspektrum S(f) durch eine Fourier-Transformation analysiert und ein Laufzeitspektrum I(t) ermittelt. Für die Fourier-Transformation bietet sich insbesondere der FFT-Algorithmus an, wobei sich die Anwendung des Spektralschätz-Algorithmus, und dabei insbesondere der MUSIC-Algorithmus, ebenfalls als vorteilhaft erwiesen hat. Das Laufzeitspektrum liefert in aller Regel eine Reihe von Peaks, die jeweils für die Reflexion an einer Grenzfläche repräsentativ sind. Um die Anzahl der Platten zu bestimmen, kann es sich daher anbieten, dass die im ermittelten Laufzeitspektrum I(t) enthaltenen Peaks gezählt werden.

Es hat sich bei dem Verfahren als vorteilhaft erwiesen, maschinelles Lernen (machine learning) und/oder KI, bei dem das genaue Analyseverfahren nicht vorgegeben wird, einzusetzen. Hierdurch können genauere Ergebnisse in kürzerer Zeit erzielt werden, wodurch die Auswerteschritte verkürzt werden können und somit das Handling der plattenförmigen Erzeugnisse weiter beschleunigt werden kann.

Das erfindungsgemäße Verfahren eignet sich insbesondere zur Durchführung auf einer oder mit einer Holzverarbeitungsmaschine, welche die Strahlungsquelle und eine Plattenhebeeinrichtung mit Saugfunktion aufweist. Dabei kann dann die Strahlungsquelle an oder im Bereich der Plattenhebeeinrichtung, insbesondere einem beweglichen Teil der Plattenhebeeinrichtung, angeordnet sein. Gemäß dem erfindungsgemäßen Verfahren hebt die Plattenhebeeinrichtung eine nicht bestimmte Anzahl von plattenförmigen Erzeugnissen durch Saugen an oder erfasst diese.

Aufgrund des oben beschriebenen Verfahrens kann nun die Strahlungsquelle aktiviert und festgestellt werden, wie viele Platten an der Plattenhebeeinrichtung hängen. Dazu kann insbesondere vorgesehen sein, dass die Saugkraft der Plattenhebeeinrichtung reduziert wird, wenn die auf der Grundlage des Mischsignals m(t) ermittelte Anzahl der von der Plattenhebeeinrichtung gehaltenen plattenförmigen Erzeugnisse größer als 1 ist. Hierdurch wird sichergestellt, dass durch die Plattenhebeeinrichtung lediglich eine einzige Platte an dieser hängt. Gegebenenfalls wird durch Verringerung der Saugkraft eine weitere Platte gelöst.

Alternativ oder ergänzend hierzu kann die Saugkraft der Plattenhebeeinrichtung reduziert werden, wenn die auf der Grundlage des Mischsignals m(t) ermittelte Anzahl der Peaks im Laufzeitspektrum I(t) größer als 2 ist. Da zwei Peaks für jeweils eine Grenzfläche sprechen und eine Platte genau zwei Grenzflächen (Oberseite und Unterseite) aufweist, sollte die Saugkraft reduziert werden, sobald innerhalb eines vorher definierten Laufzeitbereiches mehr als zwei Peaks festgestellt werden. Mehr als zwei Peaks innerhalb eines definierten Frequenzbereichs bedeutet, dass wenigstens eine dritte Grenzfläche existiert, was dann für die Anwesenheit einer weiteren Platte spricht. Neben der Reduzierung der Saugkraft kann auch an bestimmten Saugern abgeblasen werden, um so einen Luftspalt zwischen den plattenförmigen Erzeugnissen zu erzeugen, der die Erzeugnisse trennt. Dazu bietet es sich an, an der Plattenhebeeinrichtung eine Blaseinrichtung anzuordnen.

Die Erfindung wird nachfolgend anhand der Figuren näher erläutert.

Figur 1 zeigt eine schematische Ansicht einer Strahlungsquelle und eine Anzahl plattenförmiger Erzeugnisse (links) sowie ein durch Auswertung des Mischsignals gewonnenes Laufzeitspektrum (rechts).

Figur 2 zeigt eine weitere schematische Ansicht der Strahlungsquelle und eines Plattenstapels.

Figur 3 zeigt noch eine weitere schematische Ansicht der Strahlungsquelle, einer angehobenen Platte und eines Plattenstapels.

Figur 4 zeigt das Flussdiagramm zur Prüfung, ob ein zweites Werkstück mit aufgenommen worden ist.

Figur 5 zeigt ein Flussdiagramm zur Bestimmung der Stapelhöhe bei Aufnahme von Werkstücken.

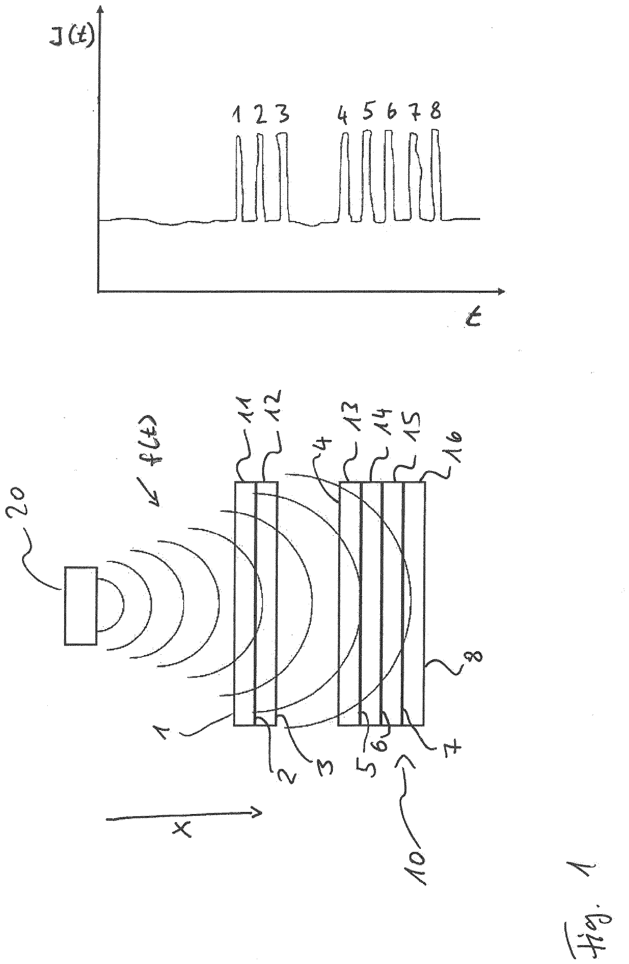

Figur 1 zeigt schematisch einen Stapel 10 aus plattenförmigen Erzeugnissen 11 bis 16, wobei die oberen beiden plattenförmigen Erzeugnisse 11, 12 von einem nicht dargestellten Sauggreifer angehoben worden sind. Oberhalb des Stapels 10 ist eine Strahlungsquelle 20 in Form eines Senders angeordnet. Die Strahlungsquelle 20 sendet, bevorzugt nach unten, in Richtung X, elektromagnetische Strahlung f(t), bevorzugt Radar- oder Terahertzstrahlung, wobei die Strahlung f(t) mit einer periodisch veränderten Frequenz als Funktion der Zeit t emittiert wird. Bevorzugt wird dabei ein Ausgangssignal f(t) mit einem sägezahnförmigen Frequenzverlauf verwendet. An jeder Grenzfläche 1 bis 8 des Stapels 10 wird ein Teil der Strahlung f(t) reflektiert, während der andere Teil die Grenzfläche 1 bis 8 durchdringt.

Ein Teil der reflektierten Strahlung a(t) gelangt in einen Empfänger, der oberhalb des Stapels 10 und außerhalb des Bewegungsbereichs des Sauggreifers angeordnet ist. Bevorzugt ist der Empfänger am Ort der Strahlungsquelle 20 angeordnet. Dies hat zum einen den Vorteil, dass die Messeinheit von Sender, Empfänger und Auswertung kompakt und dadurch auch transportabel ausgeführt sein können, und zum anderen sind der Hin- und Rückweg des Signals nahezu gleich, so dass es die Auswertung vereinfacht. Die empfangene Strahlung a(t), d.h. das Echo des Stapels 10, setzt sich zusammen aus den Reflektionssignalen a1(t), a2(t), a3(t),..., a8(t) der einzelnen Grenzflächen 1 bis 8.

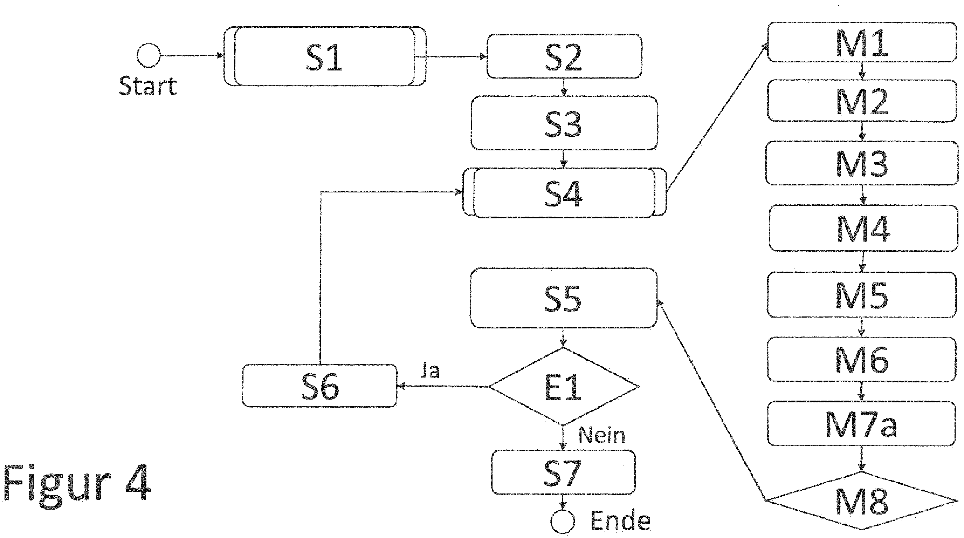

Eine Auswertemöglichkeit zu der Frage, ob der Sauggreifer ein zweites Werkstück mit aufgenommen hat, wie in Figur 1 dargestellt ist, soll anhand des Flussdiagramms der Figur 4 näher erörtert werden.

Das Verfahren startet mit dem Schritt S1, der Aufnahme eines Werkstücks und der damit verbundenen Prüfung, ob ein zweites Werkstück aufgenommen worden ist. Hierzu saugt der Greifer im Schritt S2 das Werkstück, beispielsweise ein plattenförmiges Erzeugnis 11 aus Holz oder Holzersatzstoffen, an und fährt im Schritt S3 damit in eine Messposition, wobei diese sich mit einem gewissen Abstand, wie bspw. 50 mm, über dem Reststapel 10 befindet. Hier beginnt im Schritt 4 die Prüfung, ob ein zweites Werkstück mit angehoben worden ist.

Die Prüfung beginnt im Schritt M1 mit dem Aussenden einer frequenzmodulierten Strahlung f(t). Dabei wird ein sägezahnförmiger Frequenzverlauf bevorzugt. Diese frequenzmodulierte Strahlung f(t) wird im Schritt M2 von einer der Grenzschichten 1 bis 8 reflektiert. Im Schritt M3 wird das Signal vom Empfänger aufgenommen und mit dem ausgesendeten Signal gemischt. Die gemischten Signale ergeben Differenzfrequenzen von einzelnen Reflektionen M4, wobei im Falle der Verwendung eines sägezahnförmigen Frequenzverlaufs die Differenzfrequenz unabhängig von der Sendefrequenz ist. Das so bestimmte Frequenzspektrum S(f), bzw. S(f,t), wird im Schritt M5 durch eine Fourier-Transformation in ein Spektrum der Intensität in Abhängigkeit von der Zeit I(t) transformiert. Dabei werden bevorzugt bekannte Verfahren wie FFT, DFT, IFT oder Spektralschätz-Algorithmus, insbesondere MUSIC-Algorithmus, eingesetzt. Die Maxima der Intensitätsverteilung stellen die Laufzeiten der Signale dar, die an den verschiedenen Grenzflächen 1 bis 8 reflektiert worden sind. Es wird im nächsten Schritt M6 die Distanz zwischen den Intensitätsmaxima bestimmt.

Im rechten Teil der Figur 1 ist ein derartiges Intensitätsspektrum I(t) dargestellt. Es wurde aus der Situation auf der linken Seite ermittelt. Die Abstände zwischen den Maxima, die die Grenzflächen 1 bis 8 repräsentieren, sind gleich, bis auf den Abstand zwischen den Maxima 3 und 4, der deutlich größer ist. Dieser größere Abstand zeigt an, wo es eine Lücke zwischen den plattenförmigen Erzeugnissen 11 bis 16 gibt. Diese Lücke ist entstanden zwischen der dritten Grenzfläche 3, der Unterseite des zweiten plattenförmigen Erzeugnisses 12, und der vierten Grenzfläche 4, der Oberseite des dritten Erzeugnisses 13.

Bei der Prüfung der Anzahl der angehobenen Werkstücke wird nun im Schritt M7a die Zahl der Intensitätsmaxima bis zur größeren Lücke ermittelt und im Schritt M8 zur Auswertung der Prüfung S5 übermittelt. Am Punkt E1 wird entschieden, ob ein zweites Werkstück erkannt wird. Wird ein zweites Werkstück erkannt, weil die Anzahl der ermittelten Grenzflächen größer als zwei ist, so wird im Schritt S6 eine gewisse, vorgegebene Anzahl von Sekunden gewartet. Hierbei kann beispielsweise die Stärke der Saugkraft des Greifers verringert werden, so dass eventuell das zweite plattenförmige Erzeugnis 12 auf den Stapel 10 zurückfällt. Zur Verstärkung des Ablöseprozesses kann an bestimmten Saugern zusätzlich abgeblasen werden, um damit einen Luftspalt zwischen den Platten zu schaffen. Nach der Wartezeit setzt das Prüfsystem die Prüfung bei Schritt S4 fort. Wird bei E1 keine zweite Platte gemessen, wird der Prüfvorgang beendet und der Transport des plattenförmigen Erzeugnisses 11 fortgesetzt.

Bei dem Anheben des plattenförmigen Erzeugnisses ist es auch möglich, dynamisch, also ohne anzuhalten, zu messen. Dabei werden die Abstände zwischen den Peaks A2 und A3 wie auch zwischen den Peaks A3 und A4 gemessen und die Änderungen ausgewertet. Verändert sich der Abstand der Peaks A2 und A3, so wird die Bewegung fortgesetzt; verändert sich der Abstand zwischen A3 und A4, so muss eine Trennung der beiden angehobenen plattenförmigen Erzeugnisse erfolgen.

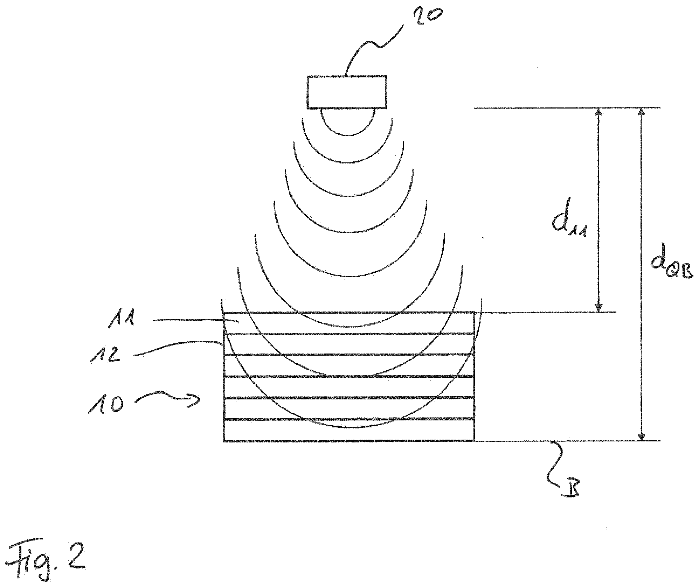

In Figur 2 ist die Messung der Höhe des Stapels 10 dargestellt, wobei der Stapel 10 aus einer Mehrzahl von plattenförmigen Erzeugnissen 11, 12 besteht. Über dem Stapel 10 ist, außerhalb des Bewegungsbereiches des Greifers, eine Strahlungsquelle 20 mit einem Empfänger angeordnet. Die ausgesendeten Strahlen, vorzugsweise Radar- oder Terahertzstrahlung, durchdringen die plattenförmigen Erzeugnisse und werden an den Grenzflächen zumindest teilweise reflektiert. Wie oben beschrieben, wird die frequenzmodulierte Strahlung detektiert und ausgewertet, so dass sich, wie im rechten Teil der Figur 1 gezeigt, ein Laufzeitspektrum ergibt. Aus dem ersten gemessenen Peak lässt sich die Distanz du der Strahlungsquelle 20 zur Oberfläche des Stapels 10 bestimmen. Aus dem letzten Peak, der sich aus der von der unteren Grenzfläche, der Unterseite des unteren plattenförmigen Erzeugnisses und dem Boden, reflektierten Strahlung ergibt, wird der Abstand $d_{QB}$ zwischen der Strahlungsquelle 20 und dem Boden B bestimmt. Die Höhe h des Stapels ergibt sich dann aus der Differenz der Abstände:

$$h = d_{QB} - d_{11} \qquad (6).$$

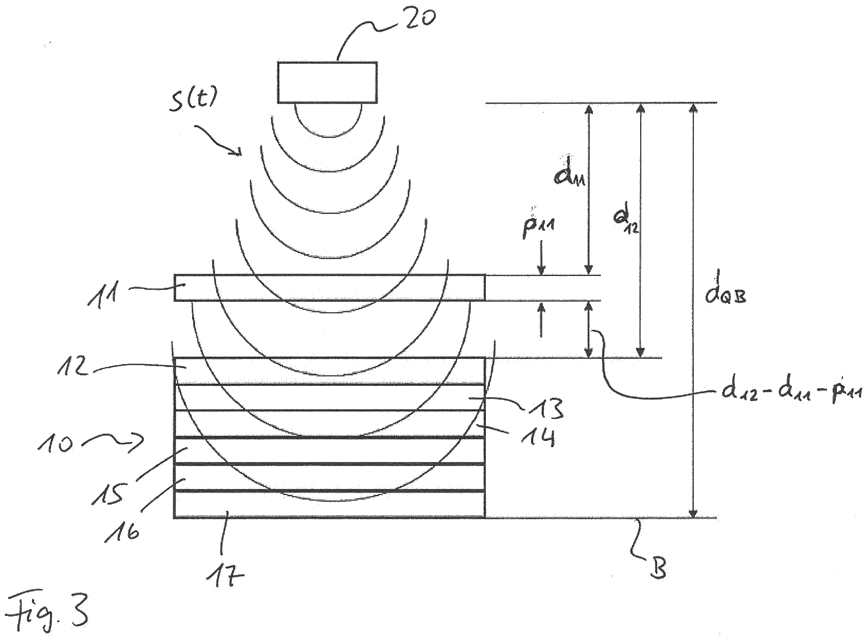

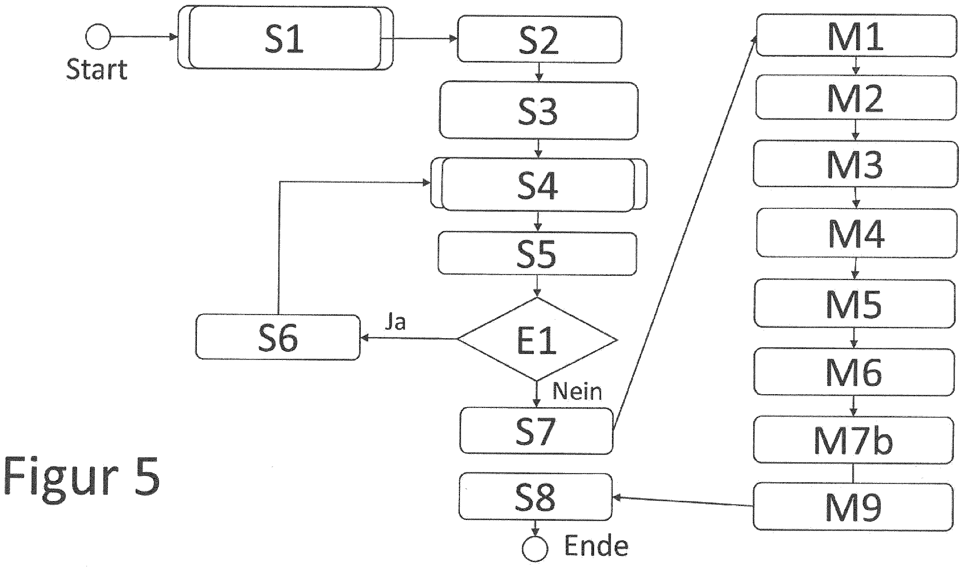

Figur 3 zeigt eine Kombination der beiden diskutierten Verfahren. Zum einen wird, wie zu den Figuren 1 und 4 bereits diskutiert, geprüft, ob nur ein plattenförmiges Erzeugnis 11 angehoben worden ist, und zum anderen wird die Stapelhöhe gemessen. Die Prüfung, ob ein zweites plattenförmiges Erzeugnis angehoben worden ist, wird analog zu Figur 4 in Figur 5 in den Schritten S1 bis S6 mit der Entscheidung E1 durchgeführt. Wird kein zweites plattenförmiges Erzeugnis festgestellt, folgt Schritt S7, die Messung der Stapelhöhe, wobei Informationen über die Werkstückdicke $p_{11}$ und/oder der Brechungsindex des Materials bekannt sind.

Die Prüfung beginnt im Schritt M1 mit dem Aussenden einer frequenzmodulierten Strahlung f(t). Dabei wird ein sägezahnförmiger Frequenzverlauf bevorzugt. Diese frequenzmodulierte Strahlung f(t) wird im Schritt M2 von einer der Grenzschichten reflektiert. Im Schritt M3 wird das Signal vom Empfänger aufgenommen und mit dem ausgesendeten Signal gemischt. Die gemischten Signale ergeben ebenfalls Differenzfrequenzen von einzelnen Reflektionen M4, wobei im Falle der Verwendung eines sägezahnförmigen Frequenzverlaufs die Differenzfrequenz unabhängig von der Sendefrequenz ist. Das so bestimmte Frequenzspektrum S(f), bzw. S(f,t), wird im Schritt M5 durch eine Fourier-Transformation in ein Spektrum der Intensität in Abhängigkeit von der Zeit I(t) transformiert. Dabei werden, wie oben bereits erwähnt, bevorzugt bekannte Verfahren wie FFT, DFT, IFT oder der Spektralschätz-Algorithmus, insbesondere der MUSIC-Algorithmus, eingesetzt. Die Maxima der Intensitätsverteilung stellen die Laufzeiten der Signale dar, die an den verschiedenen Grenzflächen reflektiert worden sind. Es wird im nächsten Schritt M6 die Distanz zwischen den Intensitätsmaxima bestimmt. Im Schritt M7b muss zwischen den Peaks 1 und 2 und ab Peak 3 der Abstand entsprechend dem Brechungsindex des Materials korrigiert werden. Die Distanz zwischen dem dritten und dem letzten Peak korreliert mit der Höhe h des Stapels 10. Diese Stapelhöhe wird im Schritt S8 gespeichert und die Entnahme fortgesetzt.

Alternativ dazu können derartige Messungen auch dazu genutzt werden, den Zustand/die Qualität der plattenförmigen Erzeugnisse zu bestimmen. Ist die Dicke der plattenförmigen Erzeugnisse bekannt, so kann aus dem Abstand zweier Peaks der Brechungsindex des Materials bestimmt werden. Der Brechungsindex ist u.a. abhängig von der Feuchte, der Dichte des Materials und von eventuellen Einschlüssen in dem Material, wobei zusätzlich noch Intensitätsabschwächungen und/oder Signalverschmierungen hinzukommen können.

Mit dem beschriebenen Verfahren lässt sich eine größere Produktionssicherheit erreichen. Zum einen kann einfach festgestellt werden, ob der Greifer auch nur ein plattenförmiges Erzeugnis vom Stapel 10 gegriffen hat, um es der weiteren Verarbeitung zuzuführen. Zum anderen erlaubt das Verfahren auch, die Vorratsmenge zu bestimmen, indem die Höhe h des Stapels 10 gemessen wird, so dass bei Bedarf Nachschub angefordert werden kann, ehe es zu einem Produktionsstillstand kommt.

**Patentansprüche**

1. Verfahren zur Bestimmung einer unbestimmten Anzahl von plattenförmigen Erzeugnissen (11 - 16) aus Holz oder Holzersatzstoffen, bei welchem

   a. eine Strahlungsquelle (20) eingesetzt wird, welche auf die unbestimmte Anzahl von plattenförmigen Erzeugnissen (11 - 16) gerichtet und mit von der Strahlungsquelle (20) emittierten elektromagnetischen Strahlung, insbesondere Radar- oder Terahertzstrahlung, f(t) bestrahlt wird, wobei die emittierte Strahlung f(t) als Ausgangssignal als Funktion der Zeit t mit periodisch veränderter Frequenz emittiert wird,
   b. das Echo a(t) der emittierten Strahlung als Eingangssignal durch einen, insbesondere am Ort der Strahlungsquelle (20) angeordneten Empfänger erfasst wird, wobei das Echo a(t) eine Summe von für vorhandene Grenzflächen (1 - 8) der unbestimmten Anzahl von plattenförmigen Erzeugnissen (11 - 16) repräsentativen Reflexionssignalen a1(t), a2(t),..., an(t) enthält;
   c. aus dem Ausgangssignal f(t) und dem Eingangssignal a(t) ein Mischsignal m(t), insbesondere in der Form einer Verknüpfung der beiden Signale f(t) und a(t), gebildet wird,
   d. auf der Grundlage des Mischsignals m(t) die Anzahl der unbestimmten Anzahl und/oder die Stärken von plattenförmigen Erzeugnissen (11 - 16) und/oder die Höhe eines Stapels aus den plattenförmigen Erzeugnissen (11 - 16) und/oder die Qualität von plattenförmigen Erzeugnissen (11 - 16) bestimmt wird/werden.

2. Verfahren nach Anspruch 1, **dadurch gekennzeichnet,**
   **dass** die Verknüpfung m(t) der beiden Signale f(t) und a(t) eine Multiplikation ist: m(t) = f(t) x a(t).

3. Verfahren nach einem der vorigen Ansprüche,
   **dadurch gekennzeichnet,**
   **dass** auf der Grundlage der im Mischsignal m(t) enthaltenen Frequenzunterschiede ($\Delta f$) zwischen dem Ausgangssignal und dem/den Reflexionssignal(en) Laufzeiten oder Laufzeitunterschiede ($\Delta t$) oder die zurückgelegte Entfernung oder Entfernungsunterschiede der einzelnen Reflexionssignale a1(t), a2(t),..., an (t) ermittelt werden.

4. Verfahren nach vorigen Ansprüche,
   **dadurch gekennzeichnet,**
   **dass** die Ausgangsstrahlung f(t) einen sägezahnförmigen Frequenzverlauf aufweist.

5. Verfahren nach einem der vorigen Ansprüche,
   **dadurch gekennzeichnet,**
   **dass** das Mischsignal m(t) durch eine Fourier-Transformation, insbesondere FFT, oder Anwendungen des Spektralschätz-Algorithmus, insbesondere dem MUSIC-Algorithmus analysiert wird.

6. Verfahren nach Anspruch 5,
   **dadurch gekennzeichnet,**
   **dass** aus dem Mischsignal m(t) ein Frequenzspektrum S(f), insbesondere mit S(f) = FFT (m(t)) ermittelt wird.

7. Verfahren nach Anspruch 6,
   **dadurch gekennzeichnet,**
   **dass** die im ermittelten Frequenzspektrum S(f) enthaltenen Peaks gezählt werden.

8. Verfahren nach einem der vorigen Ansprüche,

**dadurch gekennzeichnet,**
**dass** es mit einer Holzverarbeitungsmaschine durchgeführt wird, welche die Strahlungsquelle und eine Plattenhebeeinrichtung mit Saugfunktion aufweist, wobei die Strahlungsquelle (20) an oder im Bereich der Plattenhebeeinrichtung, insbesondere einem beweglichen Teil der Plattenhebeeinrichtung, angeordnet ist, wobei die Plattenhebeeinrichtung eine nicht bestimmte Anzahl von plattenförmigen Erzeugnissen durch Saugen erfasst oder anhebt.

9. Verfahren nach Anspruch 8,
**dadurch gekennzeichnet,**
**dass** die Saugkraft der Plattenhebeeinrichtung reduziert wird, wenn die auf der Grundlage des Mischsignals m(t) ermittelte Anzahl der von der Plattenhebeeinrichtung gehaltenen plattenförmigen Erzeugnisse (11 - 16) größer als 1 ist.

10. Verfahren nach Anspruch 7 und 8,
**dadurch gekennzeichnet,**
**dass** die Saugkraft der Plattenhebeeinrichtung reduziert wird, wenn die auf der Grundlage des Mischsignals m(t) ermittelte Anzahl der Peaks im Frequenzspektrum S(f) größer als 2 ist.

11. Verfahren nach einem der Ansprüche 8 bis 10,
**dadurch gekennzeichnet,**
**dass** an der Plattenhebeeinrichtung eine Blaseinrichtung angeordnet ist.


**Claims**

1. Method for determining an undetermined number of plate-shaped products (11 - 16) from wood or wood substitutes, in which

   a. a radiation source (20) is used which is directed to the undetermined number of plate-shaped products (11 -16) and is irradiated with electromagnetic radiation f(t), in particular radar or terahertz radiation, emitted from the radiation source (20), wherein the emitted radiation f(t) is emitted as an output signal as a function of time t with periodically changed frequency,
   b. the echo a(t) of the emitted radiation is picked up as an input signal by a receiver arranged in particular at the site of the radiation source (20), wherein the echo a(t) contains a sum of reflection signals a1(t), a2(t), ..., an(t) representative of the existing interfaces (1 -8) of the undetermined number of plate-shaped products (11 -16);
   c. a mix signal m(t) is formed from the output signal f(t) and the input signal a(t), in particular in the form of a link of the two signals f(t) and a(t),
   d. the number of the undetermined number and/or the thicknesses of the plate-shaped products (11-16) and/or the height of a stack of the plate-shaped products (11 -16) and/or the quality of the plate-shaped products (11 -16) is/are determined on the basis of the mix signal m(t).

2. Method according to claim 1 **characterised in that** the link m(t) of the two signals f(t) and a(t) is a multiplication: m(t) = f(t) x a(t).

3. Method according to one of the preceding claims **characterised in that** running times or running time differences (Δt) or the distance covered or distance differences of the individual reflection signals a1(t), a2 (t), ..., an(t) are determined on the basis of the frequency differences (Δf), contained in the mix signal m(t), between the output signal and the reflection signal(s).

4. Method according to the preceding claims **characterised in that** the output radiation f(t) has a sawtooth-shaped frequency path.

5. Method according to one of the preceding claims **characterised in that** the mix signal m(t) is analysed by a Fourier transformation, in particular FFT, or applications of the spectral estimator algorithm, in particular the MUSIC algorithm.

6. Method according to claim 5 **characterised in that** a frequency spectrum S(f), is determined from the mix signal m(t), in particular with S(f) = FFT (m(t)).

7. Method according to claim 6 **characterised in that** the peaks contained in the determined frequency spectrum S(f) are counted.

8. Method according to one of the preceding claims **characterised in that** it is carried out with a wood processing machine which has a radiation source and a plate lifting device with suction function, wherein the radiation source (20) is mounted on or in the region of the plate lifting device, in particular a movable part of the plate lifting device, wherein the plate lifting device picks up or lifts an undetermined number of plate-shaped products by suction.

9. Method according to claim 8 **characterised in that** the suction force of the plate lifting device is reduced when the number of plate-shaped products (11 - 16) held by the plate lifting device and determined on the basis of the mix signal m(t) is greater than 1.

10. Method according to claim 7 and 8 **characterised in that** the suction force of the plate lifting device is reduced when the number of the peaks in the frequency spectrum S(f) and determined on the basis of the mix signal m(t) is greater than 2.

11. Method according to one of claims 8 to 10 **characterised in that** a blower device is arranged on the plate lifting device.


**Revendications**

1. Procédé de détermination d'un nombre indéterminé de produits en forme de plaque (11 à 16) en bois ou en un matériau de substitution du bois, dans lequel

   a. une source de rayonnement (20) est utilisée, qui est dirigée sur le nombre indéterminé de produits en forme de plaques (11 à 16) et est irradié par un rayonnement électromagnétique, surtout un rayonnement radar ou un rayonnement térahertz, f (t), émis par la source de rayonnement (20), dans lequel le rayonnement émis f (t) est émis en tant que signal de sortie en fonction du temps t avec une fréquence modifiée périodiquement,
   b. l'écho a (t) du rayonnement émis est détecté en tant que signal d'entrée par un récepteur agencé surtout à l'endroit de la source de rayonnement (20), dans lequel l'écho a (t) comporte une somme de signaux de réflexion a1 (t), a2 (t), .... , an (t) représentatifs pour des interfaces existantes (1 à 8) du nombre indéterminé de produits en forme de plaques (11 à 16) ;
   c. un signal mixte m (t), surtout sous la forme d'une combinaison des deux signaux f (t) et a (t), est formé à partir du signal de sortie f (t) et le signal d'entrée a (t),
   d. sur la base du signal mixte m (t), le nombre du nombre indéterminé et / ou les épaisseurs des produits en forme de plaque (11 à 16) et / ou la hauteur d'une pile de produits en forme de plaque (11 à 16) et / ou la qualité de produits en forme de plaque (11 à 16) est / sont déterminé(s).

2. Procédé selon la revendication 1,
   **caractérisé en ce**
   **que** la combinaison m (t) des deux signaux f (t) et a (t) est une multiplication : m (t) = f (t) x a (t).

3. Procédé selon l'une quelconque des revendications précédentes, **caractérisé en ce**
   **que**, sur la base des différences de fréquence (Δf) contenues dans le signal mixte m (t) entre le signal de sortie et le signal / les signaux de réflexion, des temps de propagation ou des différences de temps de propagation (Δt) ou la distance parcourue ou des différences de distance des signaux de réflexion individuels a1 (t), a2 (t), .... , an (t) sont déterminés.

4. Procédé selon des revendications précédentes,
   **caractérisé en ce**
   **que** le rayonnement de sortie f (t) comporte une réponse en fréquence en dents de scie.

5. Procédé selon l'une quelconque des revendications précédentes, **caractérisé en ce**
   **que** le signal mixte m (t) est analysé par une transformation de Fourier, surtout FFT, ou par des applications de l'algorithme d'estimation spectrale, surtout l'algorithme MUSIC.

6. Procédé selon la revendication 5,
   **caractérisé en ce**

qu'un spectre de fréquence S (f), surtout avec S (f) = FFT (m (t) ), est déterminé à partir du signal mixte m (t).

7. Procédé selon la revendication 6,
   **caractérisé en ce**
   **que** les *peaks* contenus dans le spectre de fréquence S (f) déterminé sont comptés.

8. Procédé selon l'une quelconque des revendications précédentes, **caractérisé en ce**
   **qu'**il est effectué avec une machine pour le travail du bois, qui comporte la source de rayonnement et un dispositif de levage de plaque avec fonction d'aspiration, dans lequel la source de rayonnement (20) est agencée au dispositif de levage de plaque ou dans la région du dispositif de levage de plaque, surtout une partie mobile du dispositif de levage de plaque, dans lequel le dispositif de levage de plaque saisit ou lève un nombre indéterminé de produits en forme de plaque par aspiration.

9. Procédé selon la revendication 8,
   **caractérisé en ce**
   **que** la force d'aspiration du dispositif de levage de plaque est réduite, si le nombre de produits en forme de plaque (11 à 16), déterminé sur la base du signal mixte m (t), qui est tenu par le dispositif de levage de plaque est supérieur à 1.

10. Procédé selon la revendication 7 et 8,
    **caractérisé en ce**
    **que** la force d'aspiration du dispositif de levage de plaque est réduite, si le nombre des *peaks* dans le spectre de fréquence S (f), déterminé sur la base du signal mixte m (t), est supérieur à 2.

11. Procédé selon l'une quelconque des revendications 8 à 10, **caractérisé en ce**
    **qu'**un dispositif de soufflage est agencé au dispositif de levage de plaque.

Fig. 1

Fig. 2

Fig. 3

Figur 4

Figur 5

**IN DER BESCHREIBUNG AUFGEFÜHRTE DOKUMENTE**

**In der Beschreibung aufgeführte Patentdokumente**

- EP 2522471 B1

- DE 102016101566 A1

**In der Beschreibung aufgeführte Nicht-Patentliteratur**

- **ALBERT REDO-SANCHEZ et al.** Terahertz time-gated spectral imaging for content extraction through layered structures. *NATURE COMMUNICA-TIONS,* 09. September 2016, vol. 7
- **CORINNA L., KOCH, DANDOLO et al.** Inspection of panel paintings beneath gilded finisches using terahertz time-domain imaging. *STUDIES IN CON-SERVATION,* 10. August 2015, vol. 60, 159-166

- Characterization of European Lecquers by terahertz (THz) reflectometic imaging. **DANDOLO CORINNA L K et al.** 2013 DIGITAL HERITAGE INTERNATION-AL CONGRESS. IEEE, 28. Oktober 2013, vol. 1, 89-94